(19) Europäisches Patentamt
European Patent Office
Office européen des brevets

(11) **EP 4 596 629 A1**

(12) **EUROPEAN PATENT APPLICATION**

(43) Date of publication:
**06.08.2025 Bulletin 2025/32**

(21) Application number: **24154955.9**

(22) Date of filing: **31.01.2024**

(51) International Patent Classification (IPC):
***C08L 69/00*** *(2006.01)*

(52) Cooperative Patent Classification (CPC):
(C-Sets available)
**C08L 69/00;** C08L 2201/02; C08L 2205/02; C08L 2205/03; C08L 2205/035 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **WIRTZ, Remco**
  **4612 PX Bergen op Zoom (NL)**
- **LUGGER, Jody Ann Martin**
  **4612 PX Bergen op Zoom (NL)**
- **VAN DE GRAMPEL, Robert Dirk**
  **4612 PX Bergen op Zoom (NL)**
- **HAGENAARS, Arno**
  **4612 PX Bergen op Zoom (NL)**

(74) Representative: **Modiano, Gabriella Diana**
**Modiano & Partners SA**
**Steinsdorfstraße 14**
**80538 München (DE)**

(54) **FLAME RETARDANT POLYCARBONATE COMPOSITIONS**

(57) Thermoplastic compositions include: from about 10 wt% to about 90 wt% of a polycarbonate component including a post-consumer recycled polycarbonate (PCR-PC); from about 5 wt% to about 20 wt% of a polycarbonate-siloxane copolymer; from about 5 wt% to about 25 wt% of a glass fiber; and from about 1 wt% to about 3 wt% of a phosphazene flame retardant. In certain aspects a molded sample of the composition: has a UL94 flame retardant rating of V0 at a thickness of 1.5 mm; passes a Ball Pressure Test at 125 °C, as tested in accordance with IEC 60695-10-2; has a notched Izod impact strength of at least 10 kilojoules per square meter (kJ/m2) at 23 °C as determined in accordance with ISO 180/1U; and/or has a VICAT softening temperature of at least 132 °C as tested in accordance with ISO 306.

EP 4 596 629 A1

(52) Cooperative Patent Classification (CPC): (Cont.)

C-Sets
**C08L 69/00, C08K 5/5399, C08K 7/14,
C08L 83/10;
C08L 69/00, C08L 69/00, C08L 69/00, C08L 83/10,
C08K 7/14, C08K 5/5399, C08K 5/526,
C08L 27/18, C08K 5/103, C08K 5/3475;
C08L 69/00, C08L 69/00, C08L 69/00, C08L 83/10,
C08K 7/14, C08K 5/5399, C08K 5/526,
C08L 27/18, C08K 5/103, C08K 5/3475,
C08K 3/22, C08K 5/0041**

## Description

### FIELD OF THE DISCLOSURE

The present disclosure relates to polycarbonate compositions, and in particular to polycarbonate compositions including a post-consumer recycled polycarbonate (PCR-PC) that have good flame retardant (FR) and heat stability properties.

### BACKGROUND OF THE DISCLOSURE

It has been challenging to identify thermoplastic polymer compositions including post-consumer recycled polycarbonate (PCR-PC), glass fiber, and a polycarbonate-siloxane copolymer with UL94 V0 flame retardant (FR) performance and high heat deflection temperatures. Conventional flame retardant (FR) agents such as potassium diphenylsulfonesulfonate (KSS) and p-toluenesulphonic acid sodium salt (NaTS) do not provide the required flammability performance, while conventional FR agents based on organophosphorous compounds do not provide the required heat stability performance.

These and other shortcomings are addressed by aspects of the present disclosure.

### SUMMARY

Aspects of the disclosure relate to thermoplastic compositions including: from about 10 wt% to about 90 wt% of a polycarbonate component including a post-consumer recycled polycarbonate (PCR-PC); from about 5 wt% to about 20 wt% of a polycarbonate-siloxane copolymer; from about 5 wt% to about 25 wt% of a glass fiber; and from about 1 wt% to about 3 wt% of a phosphazene flame retardant. In certain aspects a molded sample of the composition: has a UL94 flame retardant rating of V0 at a thickness of 1.5 mm; passes a Ball Pressure Test at 125 °C, as tested in accordance with IEC 60695-10-2; has a notched Izod impact strength of at least 10 kilojoules per square meter (kJ/m2) at 23 °C as determined in accordance with ISO 180/1U; and/or has a VICAT softening temperature of at least 132 °C as tested in accordance with ISO 306.

### DETAILED DESCRIPTION

The present disclosure can be understood more readily by reference to the following detailed description of the disclosure and the Examples included therein. In various aspects, the present disclosure pertains to thermoplastic compositions including: from about 10 wt% to about 90 wt% of a polycarbonate component including a post-consumer recycled polycarbonate (PCR-PC); from about 5 wt% to about 20 wt% of a polycarbonate-siloxane copolymer; from about 5 wt% to about 25 wt% of a glass fiber; and from about 1 wt% to about 3 wt% of a phosphazene flame retardant. In certain aspects, the thermoplastic composition exhibits improved FR, heat stability, and/or impact properties.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used

herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a post-consumer recycled polycarbonate" includes mixtures of two or more post-consumer recycled polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

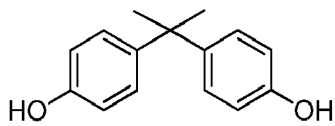

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: from about 10 wt% to about 90 wt% of a polycarbonate component including a post-consumer recycled polycarbonate (PCR-PC); from about 5 wt% to about 20 wt% of a polycarbonate-siloxane copolymer; from about 5 wt% to about 25 wt% of a glass fiber; and from about 1 wt% to about 3 wt% of a phosphazene flame retardant. The combined weight percent value of all components does not exceed 100 wt%, and all weight percent values are based on the total weight of the composition.

The PCR-PC can be formed according to conventional methods, and may include PCR-PC available from SABIC. The PCR-PC may include copolymers including PCR-PC. The PCR-PC may be clear or colored. Clear PCR-PC may be sourced from, for example, water bottles, recycled PC sheets, automobile headlights, and optical discs (e.g., one or more of compact discs (CDs), digital versatile discs (DVDs) and Blue-ray discs). One exemplary source for colored PCR-PC is water bottles.

In some aspects the thermoplastic composition includes from about 10 wt% to about 90 wt% PCR-PC. In further aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at most 90 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, of the PCR-PC. In specific aspects the composition includes from about 10 wt% to about 50 wt%, or at most 50 wt%, of the PCR-PC.

In certain aspects the PCR-PC has a total fries rearrangement of at least 200 parts per million (ppm) as determined by proton-nuclear magnetic resonance (proton-NMR) spectroscopy. In further aspects the PCR-PC has a total fries rearrangement of at least 210 ppm, or at least 220 ppm, or at least 230 ppm, or at least 240 ppm, or at least 250 ppm, or at least 260 ppm, or at least 270 ppm, or at least 280 ppm, or at least 290 ppm, or at least 300 ppm, or at least 310 ppm, or at least 320 ppm, as determined by proton-NMR spectroscopy.

In some aspects the PCR-PC includes a branching agent. Branching agents may include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride (TMTC), tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethylbenzyl)phenol), 4-chloroformyl phthalic anhydride, trimesic acid, and benzophenone tetracarboxylic acid. In a specific aspect the branching agent is 1,1,1-tris-hydroxy-phenylethane (THPE). THPE (CAS No. 27955-94-8) has the following chemical structure:

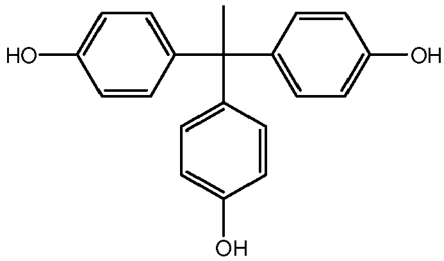

In further aspects the PCR-PC includes at least 0.10 mol%, or at least 0.11 mol%, or at least 0.12 mol%, or at least 0.13 mol%, or at least 0.14 mol%, or at least 0.15 mol%, or at least 0.16 mol%, or at least 0.17 mol%, or at least 0.18 mol%, or at least 0.19 mol%, or at least 0.20 mol%, of the branching agent.

The PCR-PC may include impurities such as sodium or iron ions. Ionic content of the PCR-PC may be determined by inductively coupled plasma mass spectrometry (ICP-MS), which is an analytical technique that can be used to measure elements at trace levels. In certain aspects the PCR-PC includes less than 20 ppm combined sodium and iron ionic content as determined by ICP-MS. In particular aspects the combined sodium and iron ionic content in the PCR-PC is less than 19 ppm, or less than 18 ppm, or less than 17 ppm, or less than 16 ppm, or less than 15 ppm, or less than 14 ppm, or less than 13 ppm, or less than 12 ppm, or less than 11 ppm, or less than 10 ppm, or less than 9 ppm, or less than 8 ppm, or less than 7 ppm, or less than 6 ppm.

In some aspects the polycarbonate-siloxane copolymer has a siloxane content of from about 5 wt% to about 45 wt%, based on the total weight of the polycarbonate-siloxane copolymer component. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC). In certain aspects the polycarbonate-siloxane copolymer has a molecular weight (Mw) of at least 25,000 grams per mole (g/mol).

The composition includes from about 5 wt% to about 20 wt% of a polycarbonate-siloxane copolymer in some aspects. In further aspects the composition includes at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the polycarbonate-siloxane copolymer.

Compositions according to aspects of the disclosure include from about 1 wt% to about 3 wt% of a phosphazene

flame retardant. In aspects, the phosphazene flame retardant may be a cyclic phosphazene of Formula (I):

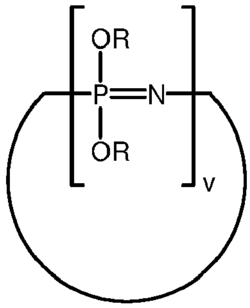

(I)

wherein R is alkyl or aryl; and wherein v is an integer from 3 to 25.

The phosphazene flame retardant may also be a linear phosphazene of Formula (II):

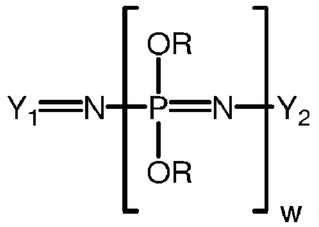

(II)

wherein R is alkyl or aryl; w is an integer from 3 to about 1,000; Y1 is -P(OR)$_3$ or-P(=O)(OR); and $Y_2$ is -P(OR)$_4$ or -P(=O)(OR)$_2$.

In particular aspects, in both Formula (I) and Formula (II), R is phenyl (-$C_6H_5$). These phosphazenes can also be crosslinked. An exemplary phosphazene is phenoxy phosphazene (PPZ), available from Fushimi, which includes about 13.9 wt% phosphorous.

In certain aspects the composition includes at least 1.0 wt%, or at least 1.1 wt%, or at least 1.2 wt%, or at least 1.25 wt%, or at least 1.3 wt%, or at least 1.4 wt%, or at least 1.5 wt%, or at least 1.6 wt%, or at least 1.7 wt%, or at least 1.75 wt%, or at least 1.8 wt%, or at most 3.0 wt%, or at most 2.9 wt%, or at most 2.8 wt%, or at most 2.75 wt%, or at most 2.7 wt%, or at most 2.6 wt%, or at most 2.5 wt%, or at most 2.4 wt%, or at most 2.3 wt%, or at most 2.25 wt%, or at most 2.2 wt%, or at most 2.1 wt%, or at most 2.0 wt%, of the phosphazene flame retardant.

The thermoplastic composition includes from about 5 wt% to about 25 wt% of a glass fiber in some aspects. The glass fiber may be selected from E-glass, S-glass, AR-glass, T-glass, D-glass and R-glass. In a still further aspect, the glass fiber is selected from E-glass, S-glass, and combinations thereof. In a still further aspect, the glass fiber is one or more S-glass materials. High-strength glass is generally known as S-type glass in the United States, R-glass in Europe and T-glass in Japan. S-glass was originally developed for military applications in the 1960s, and a lower cost version, S-2 glass, was later developed for commercial applications. High-strength glass has appreciably higher amounts of silica oxide, aluminum oxide and magnesium oxide than E-glass. S-2 glass is approximately 40-70% stronger than E-glass. The glass fibers can be made by standard processes, e.g., by steam or air blowing, flame blowing, and mechanical pulling. Exemplary glass fibers for thermoplastic compositions of the present disclosure may be made by mechanical pulling.

The glass fibers may be sized or unsized. Sized glass fibers are coated on their surfaces with a sizing composition selected for compatibility with the polymeric base resin. The sizing composition facilitates wet-out and wet-through of the polymeric base resin upon the fiber strands and assists in attaining desired physical properties in the thermoplastic composition.

In various further aspects, the glass fiber is sized with a coating agent. In a further aspect, the coating agent is present in an amount from about 0.1 wt. % to about 5 wt. % based on the weight of the glass fibers. In a still further aspect, the coating agent is present in an amount from about 0.1 wt. % to about 2 wt. % based on the weight of the glass fibers.

In preparing the glass fibers, a number of filaments can be formed simultaneously, sized with the coating agent and then bundled into what is called a strand. Alternatively, the strand itself may be first formed of filaments and then sized. The amount of sizing employed is generally that amount which is sufficient to bind the glass filaments into a continuous strand and ranges from about 0.1 to about 5 wt. %, about 0.1 to 2 wt. % based on the weight of the glass fibers. Generally, this may be about 1.0 wt. % based on the weight of the glass filament.

In a further aspect, the glass fiber can be continuous or chopped. In a still further aspect, the glass fiber is continuous. In yet a further aspect, the glass fiber is chopped. Glass fibers in the form of chopped strands may have a

length of about 0.3 millimeter (mm) to about 10 centimeters (cm), specifically about 0.5 mm to about 5 cm, and more specifically about 1.0 mm to about 2.5 cm. In various further aspects, the glass fiber has a length from about 0.2 mm to about 20 mm. In a yet further aspect, the glass fiber has a length from about 0.2 mm to about 10 mm. In an even further aspect, the glass fiber has a length from about 0.7 mm to about 7 mm. In this area, where a thermoplastic resin is reinforced with glass fibers in a composite form, fibers having a length of about 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from about 1 to about 15 μm. In an even further aspect, the diameter of the glass fiber is from about 4 to about 10 μm. In a still further aspect, the diameter of the glass fiber is from about 1 to about 10 μm. In a still further aspect, the glass fiber has a diameter from about 7 μm to about 10 μm.

In some aspects the glass fiber is a bonding or a non-bonding glass fiber. In specific aspects the glass fiber is a non-bonding glass fiber. The term "non-bonding" refers to the fact that the glass fibers do not adhere to the polymeric ingredients in the polycarbonate composition, whereas "bonding" glass fibers adhere strongly to the polymeric ingredients. The non-bonding/bonding characteristics of the glass fibers can be controlled, for example, by coating the glass fibers with coatings such as an epoxy coating, polyvinyl acetate, particular polyester resins, starch, acrylic resins, melamine, polyvinyl chloride, polyethylene oxide, polyurethane, polyepoxide, or polyvinyl alcohol, or a silane coupling agent, to change the bonding properties between the glass fibers and the other polymeric ingredients in the polycarbonate composition. In some aspects non-bonding glass fibers provide improved impact strength compared to bonding glass fibers or milled glass fibers.

In certain aspects the thermoplastic composition includes at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 25 wt%, or at most 24 wt%, or at most 23 wt%, or at most 22 wt%, or at most 21 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, of the glass fiber.

Compositions according to aspects of the disclosure may include a polycarbonate homopolymer in addition to the PCR-PC. The composition may include from about 40 wt% to about 80 wt% of the polycarbonate copolymer in certain aspects. In further aspects the composition includes at least 40 wt%, or at least 45 wt%, or at least 50 wt%, or at least 55 wt%, or at least 60 wt%, or at least 65 wt%, or at least 70 wt%, or at least 75 wt%, or at most 80 wt%, or at most 75 wt%, or at most 70 wt%, or at most 65 wt%, or at most 60 wt%, or at most 55 wt%, or at most 50 wt%, or at most 45 wt%, of the polycarbonate homopolymer. The composition may include a plurality of polycarbonate homopolymers.

In certain aspects the composition includes an additional flame retardant component. Additional flame retardant components include, but are not limited to, an additional flame retardant additive, a flame retardant synergist, an anti-drip agent (e.g., styrene-acrylonitrile encapsulated polytetrafluoroethylene (TSAN)), or a combination thereof.

In some aspects the thermoplastic composition includes at least one additional additive. The additional additive may include, but is not limited to, an acid scavenger, an antioxidant, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

In some aspects a molded sample of the composition has a UL94 flame retardant rating of V0 at a thickness of 1.5 millimeter (mm).

In further aspects a molded sample of the composition passes a Ball Pressure Test at 125 °C, as tested in accordance with IEC 60695-10-2.

In specific aspects a molded sample of the composition has a notched Izod impact strength of at least 10 kilojoules per square meter (kJ/m$^2$) at 23 °C as determined in accordance with ISO 180/1U. In particular aspects a molded sample of the composition has a notched Izod impact strength at 23 °C of at least 10 kJ/m$^2$, or at least 11 kJ/m$^2$, or at least 12 kJ/m$^2$, or at least 13 kJ/m$^2$, or at least 14 kJ/m$^2$, or at least 15 kJ/m$^2$, or at least 16 kJ/m$^2$, or at least 17 kJ/m$^2$, or at least 18 kJ/m$^2$, or at least 19 kJ/m$^2$, or from 10-30 kJ/m$^2$, as determined in accordance with ISO 180/1U.

In some aspects a molded sample of the composition has a VICAT softening temperature of at least 132 °C as tested in accordance with ISO 306. In further aspects a molded sample of the composition has a VICAT softening temperature of at least 133 °C, or at least 134 °C, or at least 135 °C, or at least 136 °C, or at least 137 °C, or from 132-150 °C as tested in accordance with ISO 306.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch,

then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In specific aspects the article is an injection molded article for applications that require PCR-PC with good impact strength, heat, and FR properties. Exemplary articles include, but are not limited to, a component of an electrical, medical or automotive enclosure, an electrical circuit housing, a smart meter enclosure, or an electrical vehicle charger. Another exemplary article is a molded case circuit breaker (MCCB).

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

from about 10 wt% to about 90 wt% of a polycarbonate component comprising a post-consumer recycled polycarbonate (PCR-PC);
from about 5 wt% to about 20 wt% of a polycarbonate-siloxane copolymer;
from about 5 wt% to about 25 wt% of a glass fiber; and
from about 1 wt% to about 3 wt% of a phosphazene flame retardant,
wherein the combined weight percent value of all components does not exceed 100 wt%, and all weight percent values are based on the total weight of the composition.

Aspect 2. The thermoplastic composition according to Aspect 1, wherein the composition comprises from about 1.25 wt% to about 2.75 wt% of the phosphazene flame retardant.

Aspect 3. The thermoplastic composition according to Aspect 1 or 2, wherein the composition includes from about 10 wt% to about 50 wt% PCR-PC.

Aspect 4. The thermoplastic composition according to any of Aspects 1 to 3, wherein the polycarbonate-siloxane copolymer has a siloxane content of from about 5 wt% to about 45 wt%.

Aspect 5. The thermoplastic composition according to any of Aspects 1 to 4, wherein the polycarbonate-siloxane copolymer has a molecular weight (Mw) of at least 25,000 grams per mole (g/mol).

Aspect 6. The thermoplastic composition according to any of Aspects 1 to 5, wherein the glass fiber is a bonding or non-bonding glass fiber.

Aspect 7. The thermoplastic composition according to any of Aspects 1 to 6, wherein the composition further comprises a polycarbonate homopolymer.

Aspect 8. The thermoplastic composition according to any of Aspects 1 to 7, wherein the composition further comprises an additional flame retardant component.

Aspect 9. The thermoplastic composition according to Aspect 8, wherein the additional flame retardant component comprises an additional flame retardant additive, a flame retardant synergist, an anti-drip agent, or a combination thereof.

Aspect 10. The thermoplastic composition according to any of Aspects 1 to 9, wherein the composition comprises at least one additional additive.

Aspect 11. The thermoplastic composition according to Aspect 10, wherein the at least one additional additive comprises an acid scavenger, an antioxidant, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

Aspect 12. The thermoplastic composition according to any of Aspects 1 to 11, wherein the PCR-PC has a total fries rearrangement of at least 200 parts per million (ppm) as determined by proton-nuclear magnetic resonance (proton-NMR) spectroscopy.

Aspect 13. The thermoplastic composition according to any of Aspects 1 to 12, wherein the PCR-PC comprises at least 0.2 mol% of a branching agent.

Aspect 14. The thermoplastic composition according to any of Aspects to 1 to 13, wherein the PCR-PC comprises less than 20 ppm combined sodium and iron ionic content as determined by inductively coupled plasma mass spectrometry (ICP-MS).

Aspect 15. The thermoplastic composition according to any of Aspects 1 to 14, wherein a molded sample of the composition has a UL94 flame retardant rating of V0 at a thickness of 1.5 mm.

Aspect 16. The thermoplastic composition according to any of Aspects 1 to 15, wherein a molded sample of the composition passes a Ball Pressure Test at 125 °C, as tested in accordance with IEC 60695-10-2.

Aspect 17. The thermoplastic composition according to any of Aspects 1 to 16, wherein a molded sample of the composition has a notched Izod impact strength of at least 10 kilojoules per square meter ($kJ/m^2$) at 23 °C as determined in accordance with ISO 180/1U.

Aspect 18. The thermoplastic composition according to any of Aspects 1 to 17, wherein a molded sample of the composition has a VICAT softening temperature of at least 132 °C as tested in accordance with ISO 306.

Aspect 19. The thermoplastic composition according to any of Aspects 1 to 18, wherein the phosphazene flame retardant comprises phenoxy phosphazene (PPZ).

Aspect 20. An article comprising the thermoplastic composition according to any of Aspects 1 to 19.

Aspect 21. The article according to Aspect 20, wherein the article is a component of an electrical enclosure or a molded case circuit breaker (MCCB)

Aspect 22. The article according to Aspect 20, wherein the article is a component of an electrical, medical or automotive enclosure, an electrical circuit housing, a smart meter enclosure, or an electrical vehicle charger.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein were compounded on a 25 millimeter (mm) Werner Pfeiderer ZSK co-rotating twin-screw extruder with a vacuum vented standard mixing screw operated at a screw speed of 300 rpm. Typical extruder

settings are listed in Table 1:

**Table 1 - Extruder Settings**

| Extruder | Unit | 25 mm ZSK |
|---|---|---|
| Die | - | 2 holes |
| Feed temperature | °C | 40 |
| Zone 1 temp. | °C | 180-200 |
| Zone 2-8 temp. | °C | 300 |
| Die temperature | °C | 300 |
| Screw speed | rpm | 300 |
| Throughput | kg/h | 16-30 |
| Vacuum 1 | bar | ~0.7 |

The strands were cooled through a water bath prior to pelletizing. An Engel 45, 75, 90 molding machine was used to mold the test parts for standard physical property testing. The pellets were dried for 2-3 hours at 120 °C in a forced air-circulating oven prior to injection molding. Typical molding conditions are provided in Table 2:

**Table 2 - Molding Conditions**

| Molding machine | Unit | Engel Molding Machine |
|---|---|---|
| Pre-drying time | h | 2-3 |
| Pre-drying temp. | °C | 120 |
| Hopper temp. | °C | 40 |
| Zone 1 temp. | °C | 250-310 |
| Zone 2 temp. | °C | 260-320 |
| Zone 3 temp. | °C | 270-330 |
| Nozzle temp. | °C | 265-325 |
| Mold temperature | °C | 80-110 |
| Screw speed | rpm | 25 |
| Back pressure | bar | 7 |
| Injection time | s | 1-2 |
| Approx. cycle time | s | 37 |

Compositions described herein included one or more of the components listed in Table 3:

**Table 3 - Components**

| | | |
|---|---|---|
| PC1 | Linear poly(bisphenol A carbonate), CAS Reg. No, 25971-63-5, Mw = 30,000-31,000 g/mol per gel permeation chromatography (GPC) using bisphenol A homopolycarbonate standards | SABIC |
| PC2 | Linear bisphenol A polycarbonate, CAS Reg. No, 25971-63-5, Mw = 21,000 - 22,500 grams per mole, as determined by GPC relative to linear bisphenol A polycarbonate standards | SABIC |
| PC-Si | Polycarbonate-siloxane copolymer having a siloxane content of 20 weight percent, average PDMS block length of 45 units, having a Mw of 28,000 to 32,000 grams per mole as determined by gel permeation chromatography relative to linear bisphenol A polycarbonate standards, produced by interfacial polymerization and endcapped with p-cumylphenol | SABIC |

(continued)

| | | |
|---|---|---|
| PCR-PC1 | Recycle polycarbonate, Mw = 25,100 grams per mole, as determined by GPC relative to linear bisphenol A polycarbonate standards | Guangdong Rhino New Material Technology |
| PCR-PC2 | Recycle polycarbonate, Mw = 29,900 grams per mole, as determined by GPC relative to linear bisphenol A polycarbonate standards | Sun Sang Chemicals Processing |
| PCR-PC3 | Recycle polycarbonate, Mw = 18,000grams per mole, as determined by GPC relative to linear bisphenol A polycarbonate standards | Sun Sang Chemicals Processing |
| TBPP | Tris(2,4-di-tert-butylphenyl) phosphite, CAS Reg. No. 31570-04-4; available as IRGAFOS™ 168 | BASF |
| TSAN | Encapsulated Polytetrafluoroethylene, CAS Reg. No. 9002-84-0, with 47-53 wt% poly(tetrafluoroethylene) | SABIC |
| KSS | Potassium diphenylsulfonesulfonate, CAS Reg. No. 63316-43-8 | Arichem |
| Sol-DP | Phosphoric acid, P,P'-1,4-phenylene P,P,P',P'-tetraphenyl ester, CAS Reg. No. 51732-57-1; available as Fyrolflex Sol-DP | ICL |
| PPZ | Phenoxy phosphazene, 13.94 wt% phosphorous | Fushimi |
| PETS | Pentaerythritol tetrastearate, CAS Reg. No. 115-83-3 | FACI SpA. |
| Glass | Non-bonding, chopped, glass fiber suitable for polycarbonate | 3B Fiber-glass |
| $TiO_2$ | Titanium dioxide, CAS Reg. No. 13463-67-7; available as KRONOS® 2233 | KRONOS |
| UV | 2-(2 hydroxy-5-t-octylphenyl) benzotriazole, CAS Reg. No. 3147-75-9 | Hunan Chemical BV |
| NaTS | p-Toluenesulphonic acid sodium salt, CAS Reg. No. 657-84-1 | Arichem |
| Colorants | Colorant package | |

Flammability tests were performed on samples at a thickness of 1.5 mm in accordance with the Underwriter's Laboratory (UL) UL 94 standard. In some cases, a second set of 5 bars was tested to give an indication of the robustness of the rating. The rating criteria are shown in Table 4. Total flame-out-times for all bars (FOT = t1 + t2) were determined:

**Table 4 - Standards for UL94 Ratings**

| | $t_1$ and/or $t_2$ (seconds) | 5-bar cumulative FOT (seconds) | Burning drips igniting cotton? |
|---|---|---|---|
| V-0 | <10 | <50 | No |
| V-1 | <30 | <250 | No |
| V-2 | <30 | <250 | Yes |
| N.R. (no rating) | >30 | >250 | |

Other properties were measured as indicated in the tables. VICAT softening temperature was evaluated in accordance with ISO 306. The ball pressure test (BPT) was evaluated in accordance with IEC 60695-10-2. Notched Izod impact strength (NII) was evaluated in accordance with ISO 180/1U at room temperature (23 °C).

Compositions having various flame retardants were prepared and tested as shown in Table 5:

**Table 5 - Comparative and Example Compositions**

| Component (wt%) | C1 | C2 | C3 | Ex4 |
|---|---|---|---|---|
| PC1 | 34 | 2.3 | 2.3 | 2.3 |
| PC2 | 43.78 | 45.48 | 43.7 | 43.7 |

(continued)

| Component (wt%) | C1 | C2 | C3 | Ex4 |
|---|---|---|---|---|
| PCR-PC1 | | 30 | 30 | 30 |
| PC-Si | 12 | 12 | 12 | 12 |
| PETS | 0.3 | 0.3 | 0.3 | 0.3 |
| TBPP | 0.05 | 0.05 | 0.05 | 0.05 |
| TSAN | 0.5 | 0.5 | 0.5 | 0.5 |
| Sol-DP | | | 2 | |
| PPZ | | | | 2 |
| KSS | 0.16 | 0.16 | | |
| NaTS | 0.06 | 0.06 | | |
| UV | 0.15 | 0.15 | 0.15 | 0.15 |
| Glass Fiber | 9 | 9 | 9 | 9 |
| **Total (wt%)** | 100 | 100 | 100 | 100 |
| | | | | |
| **Properties** | | | | |
| VICAT - Softening temp-Avg (°C) | 142.3 | 142.3 | 130.8 | 135.4 |
| BPT @ 125C | Pass | Pass | Fail | Pass |
| UL 94 at 1.5 mm | V0 | V1 | V0 | V0 |
| ∑FOT (5 bar) (s, cumulative) | 35 | 48 | 23 | 23 |
| UL 94 at 1.5 mm | V0 | V1 | V0 | V0 |
| ∑FOT (5 bar) (s, cumulative) | 44 | 41 | 20 | 23 |
| ∑FOT (10 bar) (s, cumulative) | 79 | 89 | 43 | 46 |

Composition C2 achieved a V1 rating because one or more of the individual t1 or t2 measurements were greater than 10 seconds. Comparative composition C1 includes KSS and NaTS as FR components, and does not include PCR-PC. Comparative composition C2 does not have good flammability properties, but does has good heat properties with a VICAT softening temperature of about 142 °C. Comparative composition C3 has good flame retardance properties, but does not satisfy desired heat criteria. In contrast, example composition Ex4 has good flame retardance and heat properties even with inclusion of 30 wt% PCR-PC.

Additional compositions were prepared and tested as demonstrated in Table 6:

**Table 6 - Comparative and Example Compositions**

| Component (wt%) | C5 | Ex6 |
|---|---|---|
| PC1 | 2.3 | 2.3 |
| PC2 | 42.71 | 42.71 |
| PCR PC1 | 30 | 30 |
| PC-Si | 12 | 12 |
| PETS | 0.3 | 0.3 |
| TBPP | 0.05 | 0.05 |
| TSAN | 0.5 | 0.5 |
| Sol-DP | 2 | |
| PPZ | | 2 |
| UV | 0.15 | 0.15 |

(continued)

| Component (wt%) | C5 | Ex6 |
|---|---|---|
| Glass Fiber | 9 | 9 |
| TiO2 | 0.02 | 0.02 |
| Colorants | 0.97 | 0.97 |
| **Total (wt%)** | 100 | 100 |
| | | |
| **Properties** | | |
| VICAT - Softening temp-Avg (°C) | 129 | 134 |
| UL 94 at 1.5 mm | V1 | V0 |
| ∑FOT (5 bar) (s, cumulative) | 53 | 21 |
| UL 94 at 1.5 mm | NR | V0 |
| ∑FOT (5 bar) (s, cumulative) | 121 | 26 |
| ∑FOT (10 bar) (s, cumulative) | 174 | 47 |

Compositions C5 and Ex6 included a blend of colorants. From the results, it is observed that composition C5 failed to satisfy V0 FR performance. It is believed that increasing the phosphoric acid (Sol-DP) FR content in C5 would allow the composition to satisfy the required FR performance, but at the expense of high heat performance. In contrast, composition Ex6 including the same content of phosphazene had very good FR performance, achieving a UL94 V0 rating with very good FOT performance. Even at 10 bars the composition had a cumulative FOT of less than 50. This composition also had good heat performance (VICAT softening temperature of 134 °C). This demonstrates that compositions including a high PCR-PC content can satisfy desired FR and heat performance criteria.

Further compositions including different types of PCR-PC were prepared and tested as shown in Table 7. For these examples the individual data points for flame-out time are provided:

**Table 7 - Comparative and Example Compositions**

| Component (wt%) | Ex7 | Ex8 | C9 |
|---|---|---|---|
| PC2 | 42.88 | 42.88 | 42.88 |
| PCR-PC1 | 30 | | |
| PCR-PC2 | | 30 | |
| PCR-PC3 | | | 30 |
| PC-Si | 12 | 12 | 12 |
| PETS | 0.3 | 0.3 | 0.3 |
| TBPP | 0.05 | 0.05 | 0.05 |
| TSAN | 0.5 | 0.5 | 0.5 |
| PPZ | 2 | 2 | 2 |
| UV | 0.15 | 0.15 | 0.15 |
| Glass Fiber | 9 | 9 | 9 |
| TiO2 | 3.09 | 3.09 | 3.09 |
| Colorants | 0.03 | 0.03 | 0.03 |
| **Total (wt%)** | 100 | 100 | 100 |
| | | | |
| **Properties** | | | |
| VICAT - Softening temp-Avg (°C) | 137 | 137 | 134 |

(continued)

| Properties | | | |
|---|---|---|---|
| Notched Izod impact strength (NII), RT (23 °C) (kJ/$m^2$) | 18 | 19 | 13 |
| UL 94 at 1.5 mm | V0 | V0 | V1 |
| ∑FOT (5 bar) (s, cumulative) | 36 | 39 | 46 |
| Individual data points for FOT evaluation: | | | |
| Individual data-point (t1) | 1 | 6 | 2 |
| Individual data-point (t1) | 2 | 2 | 2 |
| Individual data-point (t1) | 2 | 6 | 2 |
| Individual data-point (t1) | 2 | 3 | 2 |
| Individual data-point (t1) | 2 | 1 | 1 |
| Individual data-point (t2) | 4 | 2 | 3 |
| Individual data-point (t2) | 6 | 9 | 16 |
| Individual data-point (t2) | 5 | 3 | 3 |
| Individual data-point (t2) | 5 | 3 | 12 |
| Individual data-point (t2) | 7 | 4 | 3 |

Comparative composition C9 failed to satisfy a UL94 V0 rating because some of the individual FOT data points had a value greater than 10 seconds. In contrast, example compositions Ex7 and Ex8 satisfied all desired criteria including UL 94 V0 rating at 1.5 mm, VICAT softening temperature of at least 132 °C, and NII at RT of at least 10 kJ/$m^2$. It is believed that comparative composition C9 including PCR-PC3 failed to satisfy V0 performance because the PCR-PC3 lacks sufficient Fries rearrangements and/or sufficient branching agent content.

The ion content - and in particular the sodium and iron ion content - of each polycarbonate resin was determined using inductively coupled plasma mass spectrometry (ICP-MS). Ion content is a measure of impurities in the resin. Results are shown in Table 8:

**Table 8 - Ion content via ICP-MS**

| PC Resin | PC1 | PC2 | PCR-PC1 | PCR-PC2 | PCR-PC3 |
|---|---|---|---|---|---|
| Ion content (ppm) | | | | | |
| Sodium (Na) ions | < 0.5 | < 0.5 | 3.0 | 2.2 | 1.4 |
| Iron (Fe) ions | <1.0 | <1.0 | 2.4 | 6.2 | 2.6 |

From the results it is observed that - as expected - the virgin PC resin (PC1 and PC2) had low impurity levels. The sodium and iron ion content of the PCR-PC resins was higher than virgin PC, but still less than 20 parts per million, and more preferably less than 10 ppm.

The PCR-PC resins were also evaluated for Fries rearrangement content and branching agent concentration. Results are shown in Table 9:

**Table 9 - Characteristics of PCR-PC Resins**

| PCR Resin | Total Fries | Branching agent | |
|---|---|---|---|
| | | | |
| | | Type | Conc. |
| | [ppm] | | [wt%] |
| PCR-PC1 | 327 | n.d. | n.d. |
| PCR-PC2 | n.d. | THPE | 0.20% |

(continued)

| | | Type | Conc. |
|---|---|---|---|
| | [ppm] | | [wt%] |
| PCR-PC3 | 131 | n.d. | n.d. |

Fries rearrangement content was determined by proton-NMR spectroscopy, which relates the integral of the 1H NMR signal of the Fries components to the integral of the eight polycarbonate protons. Specifically, in this method approximately 30 mg of the resin or blended material was added to 1 mL of CDCl3, deuterated chloroform, 99% grade, containing 0.03 % tetra methyl silane (TMS) as an internal standard for chemical shift calibration. The data was acquired on a 600 MHz NMR from 256 scans. Standard manipulations of the free induced decay signal by Fourier transformation, phase and baseline correction was performed to obtain the spectrum with TMS as internal standard for chemical shift calibration. Specifically, the integrals of the signals at 8.01 ppm, 8.14 ppm and 7.60 ppm were proportioned to the integral of the polycarbonate protons between 6.4 to 7.5 ppm and used to calculate the total Fries content.

As shown, PCR-PC1 had a high (>200 ppm and more preferably >300 ppm) total fries rearrangement content. PCR-PC2 had a THPE branching agent content of 0.2 wt%. PCR-PC3 had a low total fries rearrangement content and no detectible branching agent content. It is believed that this helps to explain the results in Table 7 showing comparative composition C9 including PCR-PC3 as failing to satisfy a UL94 V0 rating at 1.5 mm.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

from about 10 wt% to about 90 wt% of a polycarbonate component comprising a post-consumer recycled polycarbonate (PCR-PC);
from about 5 wt% to about 20 wt% of a polycarbonate-siloxane copolymer;
from about 5 wt% to about 25 wt% of a glass fiber; and
from about 1 wt% to about 3 wt% of a phosphazene flame retardant,
wherein the combined weight percent value of all components does not exceed 100 wt%, and all weight percent values are based on the total weight of the composition.

**2.** The thermoplastic composition according to claim 1, wherein the composition comprises from about 1.25 wt% to about 2.75 wt% of the phosphazene flame retardant.

**3.** The thermoplastic composition according to claim 1 or 2, wherein the composition includes from about 10 wt% to about 50 wt% PCR-PC.

**4.** The thermoplastic composition according to any of claims 1 to 3, wherein the polycarbonate-siloxane copolymer has a siloxane content of from about 5 wt% to about 45 wt%.

**5.** The thermoplastic composition according to any of claims 1 to 4, wherein the composition further comprises a polycarbonate homopolymer.

**6.** The thermoplastic composition according to any of claims 1 to 5, wherein the composition further comprises an

additional flame retardant component comprising an additional flame retardant additive, a flame retardant synergist, an anti-drip agent, or a combination thereof.

**7.** The thermoplastic composition according to any of claims 1 to 6, wherein the composition comprises at least one additional additive comprising an acid scavenger, an antioxidant, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

**8.** The thermoplastic composition according to any of claims 1 to 7, wherein the PCR-PC has a total fries rearrangement of at least 200 parts per million (ppm) as determined by proton-nuclear magnetic resonance (proton-NMR) spectroscopy.

**9.** The thermoplastic composition according to any of claims 1 to 8, wherein the PCR-PC comprises at least 0.2 mol% of a branching agent.

**10.** The thermoplastic composition according to any of claims to 1 to 9, wherein the PCR-PC comprises less than 20 ppm combined sodium and iron ionic content as determined by inductively coupled plasma mass spectrometry (ICP-MS).

**11.** The thermoplastic composition according to any of claims 1 to 10, wherein a molded sample of the composition has a UL94 flame retardant rating of V0 at a thickness of 1.5 mm.

**12.** The thermoplastic composition according to any of claims 1 to 11, wherein a molded sample of the composition passes a Ball Pressure Test at 125 °C, as tested in accordance with IEC 60695-10-2.

**13.** The thermoplastic composition according to any of claims 1 to 12, wherein a molded sample of the composition has a notched Izod impact strength of at least 10 kilojoules per square meter ($kJ/m^2$) at 23 °C as determined in accordance with ISO 180/1U.

**14.** The thermoplastic composition according to any of claims 1 to 13, wherein a molded sample of the composition has a VICAT softening temperature of at least 132 °C as tested in accordance with ISO 306.

**15.** An article comprising the thermoplastic composition according to any of claims 1 to 14, wherein the article is a component of an electrical, medical or automotive enclosure, an electrical circuit housing, a smart meter enclosure, or an electrical vehicle charger.

Europäisches Patentamt
European Patent Office
Office européen des brevets

# EUROPEAN SEARCH REPORT

Application Number
EP 24 15 4955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 382 570 A1 (LG CHEMICAL LTD [KR]) 12 June 2024 (2024-06-12) * example 5 * ----- | 1-15 | INV. C08L69/00 |
| X | EP 3 683 271 A1 (SABIC GLOBAL TECHNOLOGIES BV [NL]) 22 July 2020 (2020-07-22) * examples C2.4,C2.5; table 2A * * paragraph [0063] * ----- | 1-15 | |
| X | WO 2020/118478 A1 (COVESTRO DEUTSCHLAND AG [DE]; HUANG ZHENYU [CN]) 18 June 2020 (2020-06-18) * example E3; table 3 * ----- | 1-15 | |
| X | WO 2022/190000 A1 (SHPP GLOBAL TECH BV [NL]) 15 September 2022 (2022-09-15) * example 23; table 7 * ----- | 1-15 | |
| Y | KR 102 303 031 B1 (SAMYANG CORP [KR]) 23 September 2021 (2021-09-23) * paragraphs [0142] - [0150] * ----- | 1-15 | TECHNICAL FIELDS SEARCHED (IPC) |
| Y | CN 104 704 059 A (SABIC INNOVATIVE PLASTICS IP) 10 June 2015 (2015-06-10) * examples 4-7; table 6 * ----- | 1-15 | C08L |

The present search report has been drawn up for all claims

1

| Place of search | Date of completion of the search | Examiner |
|---|---|---|
| The Hague | 17 June 2024 | Schlicke, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 15 4955

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | Publication date | Patent family member(s) | Publication date |
|---|---|---|---|
| EP 4382570 A1 | 12-06-2024 | EP 4382570 A1 | 12-06-2024 |
| | | TW 202409196 A | 01-03-2024 |
| | | WO 2024039099 A1 | 22-02-2024 |
| EP 3683271 A1 | 22-07-2020 | CN 113454162 A | 28-09-2021 |
| | | EP 3683271 A1 | 22-07-2020 |
| | | EP 3911704 A1 | 24-11-2021 |
| | | KR 20210113288 A | 15-09-2021 |
| | | US 2022064439 A1 | 03-03-2022 |
| | | WO 2020148723 A1 | 23-07-2020 |
| WO 2020118478 A1 | 18-06-2020 | CN 113366061 A | 07-09-2021 |
| | | WO 2020118478 A1 | 18-06-2020 |
| WO 2022190000 A1 | 15-09-2022 | CN 116981736 A | 31-10-2023 |
| | | EP 4305106 A1 | 17-01-2024 |
| | | US 2024174801 A1 | 30-05-2024 |
| | | WO 2022190000 A1 | 15-09-2022 |
| KR 102303031 B1 | 23-09-2021 | NONE | |
| CN 104704059 A | 10-06-2015 | CN 104334638 A | 04-02-2015 |
| | | CN 104350098 A | 11-02-2015 |
| | | CN 104364313 A | 18-02-2015 |
| | | CN 104395402 A | 04-03-2015 |
| | | CN 104395403 A | 04-03-2015 |
| | | CN 104428354 A | 18-03-2015 |
| | | CN 104583316 A | 29-04-2015 |
| | | CN 104704059 A | 10-06-2015 |
| | | CN 107434907 A | 05-12-2017 |
| | | EP 2855570 A1 | 08-04-2015 |
| | | EP 2855575 A2 | 08-04-2015 |
| | | EP 2855581 A1 | 08-04-2015 |
| | | EP 2855585 A1 | 08-04-2015 |
| | | EP 2855586 A1 | 08-04-2015 |
| | | EP 2855587 A1 | 08-04-2015 |
| | | EP 2855588 A1 | 08-04-2015 |
| | | EP 2855593 A2 | 08-04-2015 |
| | | EP 3202851 A1 | 09-08-2017 |
| | | KR 20150013758 A | 05-02-2015 |
| | | KR 20150013814 A | 05-02-2015 |
| | | KR 20150013897 A | 05-02-2015 |
| | | KR 20150023341 A | 05-03-2015 |
| | | KR 20150023453 A | 05-03-2015 |
| | | KR 20150023463 A | 05-03-2015 |
| | | US 2013313493 A1 | 28-11-2013 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO. EP 24 15 4955

This annex lists the patent family members relating to the patent documents cited in the above-mentioned European search report. The members are as contained in the European Patent Office EDP file on
The European Patent Office is in no way liable for these particulars which are merely given for the purpose of information.

17-06-2024

| Patent document cited in search report | Publication date | Patent family member(s) | Publication date |
|---|---|---|---|
| | | US 2013317141 A1 | 28-11-2013 |
| | | US 2013317143 A1 | 28-11-2013 |
| | | US 2013317144 A1 | 28-11-2013 |
| | | US 2013317145 A1 | 28-11-2013 |
| | | US 2013317146 A1 | 28-11-2013 |
| | | US 2013317147 A1 | 28-11-2013 |
| | | US 2013317148 A1 | 28-11-2013 |
| | | WO 2013175445 A2 | 28-11-2013 |
| | | WO 2013175450 A2 | 28-11-2013 |
| | | WO 2013175451 A1 | 28-11-2013 |
| | | WO 2013175453 A1 | 28-11-2013 |
| | | WO 2013175455 A1 | 28-11-2013 |
| | | WO 2013175456 A1 | 28-11-2013 |
| | | WO 2013177497 A1 | 28-11-2013 |
| | | WO 2013177558 A1 | 28-11-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7
- *CHEMICAL ABSTRACTS*, 27955-94-8
- *CHEMICAL ABSTRACTS*, 31570-04-4
- *CHEMICAL ABSTRACTS*, 9002-84-0
- *CHEMICAL ABSTRACTS*, 63316-43-8
- *CHEMICAL ABSTRACTS*, 51732-57-1
- *CHEMICAL ABSTRACTS*, 115-83-3
- *CHEMICAL ABSTRACTS*, 13463-67-7
- *CHEMICAL ABSTRACTS*, 3147-75-9
- *CHEMICAL ABSTRACTS*, 657-84-1